(19) Europäisches Patentamt
European Patent Office
Office européen des brevets

(11) EP 1 195 064 B1

(12) **FASCICULE DE BREVET EUROPEEN**

(45) Date de publication et mention de la délivrance du brevet:
**27.08.2003 Bulletin 2003/35**

(21) Numéro de dépôt: **00951590.9**

(22) Date de dépôt: **15.06.2000**

(51) Int Cl.⁷: **H04N 17/00**

(86) Numéro de dépôt international:
**PCT/FR00/01659**

(87) Numéro de publication internationale:
**WO 01/001705 (04.01.2001 Gazette 2001/01)**

(54) **PROCEDE D'EVALUATION DE LA QUALITE DE SEQUENCES AUDIOVISUELLES**

VERFAHREN ZUR QUALITÄTSBEURTEILUNG VON AUDIOVISUELLEN SEQUENZEN

METHOD FOR EVALUATING THE QUALITY OF AUDIO-VISUAL SEQUENCES

(84) Etats contractants désignés:
**DE FR GB NL**

(30) Priorité: **23.06.1999 FR 9908008**

(43) Date de publication de la demande:
**10.04.2002 Bulletin 2002/15**

(73) Titulaire: **TELEDIFFUSION DE FRANCE**
**75015 Paris (FR)**

(72) Inventeurs:
- **BAINA, Jamal**
  **F-54000 Nancy (FR)**
- **BRETILLON, Pierre**
  **F-57000 Metz (FR)**

(74) Mandataire: **Jacquard, Philippe Jean-Luc et al**
**Cabinet ORES,**
**36,rue de St Pétersbourg**
**75008 Paris (FR)**

(56) Documents cités:
**US-A- 5 446 492**

- **QUINCY E A ET AL: "Expert pattern recognition method for technology-independent classification of video transmission quality" GLOBECOM '88. IEEE GLOBAL TELECOMMUNICATIONS CONFERENCE AND EXHIBITION - COMMUNICATIONS FOR THE INFORMATION AGE. CONFERENCE RECORD (IEEE CAT. NO.88CH2535-3), HOLLYWOOD, FL, USA, 28 NOV.-1 DEC. 1988, pages 1304-1308 vol.3, XP002133255 1988, New York, NY, USA, IEEE, USA**
- **VORAN S D ET AL: "THE DEVELOPMENT AND CORRELATION OF OBJECTIVE AND SUBJECTIVE VIDEO QUALITY MEASURES" PROCEEDINGS OF THE PACIFIC RIM CONFERENCE ON COMMUNICATIONS, COMPUTERSAND SIGNAL PROCESSING,US,NEW YORK, IEEE, vol. -, 1991, pages 483-485, XP000280345**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 195 064 B1

Printed by Jouve, 75001 PARIS (FR)

## Description

La présente invention a pour objet un procédé d'évaluation de la qualité d'une séquence audiovisuelle, une telle séquence étant définie, sous sa forme la plus générale, comme comprenant des signaux audio et/ou vidéo.

La numérisation des signaux audio et vidéo a ouvert la possibilité de pouvoir copier, stocker ou transmettre ce type d'information en maintenant une qualité constante. Cependant la grande quantité d'information véhiculée par les signaux audiovisuels nécessite en pratique l'utilisation de méthodes de compression numérique pour réduire le débit binaire.

La norme MPEG2 décrit un certain type de techniques applicables pour la réduction de débit. Ces algorithmes sont dits "avec pertes", car les signaux restitués après le décodage ne sont plus identiques aux originaux. Afin de maintenir une qualité acceptable pour le téléspectateur final, les algorithmes de réduction de débit tiennent compte des propriétés perceptuelles de l'oeil et de l'oreille humaines. En dépit de ceci, les contraintes imposées, de débit ou de largeur de bande disponible pour la transmission, ainsi que le contenu des signaux impliquent l'apparition de dégradations caractéristiques sur le signal après décodage. Ces dégradations introduites par la chaîne globale MPEG2 - codage et transmission - influent directement sur la qualité finale perçue.

L'évaluation automatique de la qualité des signaux audiovisuels a un large champ d'applications dans la chaîne de télévision numérique : production, distribution, et évaluation des performances des systèmes.

Les dispositifs existants ont par contre été élaborés pour des tests en laboratoires et ne sont pas adaptés pour la télésurveillance des réseaux de distribution.

La qualification des dégradations affectant la qualité de l'image et de l'audio lors de l'application d'un codage à réduction de débit ou d'une transmission, est possible de deux manières différentes. D'une part, les tests subjectifs conduits dans des conditions précises, fournissent des résultats reproductibles. Cependant, ils sont longs et coûteux à réaliser. D'autre part, les systèmes automatiques d'évaluation de la qualité par des mesures objectives permettent, par exemple, de faciliter la mise au point et la comparaison d'algorithmes de codage. Ils offrent la possibilité de tester de manière ponctuelle ou en continu des systèmes numériques. Pour obtenir des mesures objectives significativement corrélés aux valeurs subjectives, les propriétés du système visuel humain doivent être prises en compte.

La notion de qualité est essentiellement relative. En effet, même le téléspectateur placé dans des conditions habituelles d'observation (chez lui) juge de la qualité des signaux qui lui sont présentés par rapport à une référence. Celle-ci est dans ce cas constituée de ses attentes ou de ses habitudes. De même, une méthode d'évaluation de qualité objective effectue une analyse des dégradations introduites par le système sur les signaux en tenant compte des signaux de référence présents en entrée du système. L'étude des métriques objectives passe donc, d'une part, par l'analyse des défauts introduits dans les signaux, et d'autre part par celle du système perceptuel humain et de ses propriétés. Les différentes approches sont fondées soit sur le calcul du signal erreur, soit sur l'identification de signatures particulières des artefacts introduits par le système audiovisuel. L'application de modèles perceptuels permet d'évaluer l'importance des dégradations pour le système perceptuel humain SPH.

Les essais subjectifs sont le résultat de la soumission des signaux audiovisuels à un ensemble d'observateurs représentatifs de la population. Il s'agit de réaliser dans des conditions de visualisation et d'écoute contrôlées, un ensemble de sondages de satisfaction. En effet, les signaux sont présentés aux observateurs selon un protocole prédéfini, de manière à les faire réagir sur la qualité finale. La gradation de la qualité suivant une échelle prédéfinie est effectuée. Des notes d'évaluation de la qualité sont obtenues à la suite de la présentation de séquences audio, vidéo ou de séquences audio et vidéo simultanément. Des calculs statistiques permettent d'affiner ces notes individuelles en les filtrant et en les homogénéisant. Plusieurs méthodologies d'essais subjectifs sont normalisées notamment dans la recommandation ITU-R Bt.500 intitulée "Method for the subjective assessment of the quality of television pictures". Deux d'entre elles utilisant une échelle de notation continue sont :

- DSCQS : protocole dit "Double Stimulus Continuous Quality Scale".
- SSCQE : protocole dit "Single Stimulus Continuous Quality Evaluation".

La première méthode permet d'obtenir une note pour une séquence vidéo de 10 secondes. Il faut présenter successivement les deux séquences A et A', respectivement originale et dégradée (cf. figure 1).

La seconde méthode s'affranchit des signaux de référence pour évaluer de manière intrinsèque une séquence donnée. La figure 2 présente une courbe de notations subjectives réalisée sur une séquence longue de 30 minutes. L'axe des abscisses représente l'axe du temps. Un échantillon de la notation subjective est relevé tous les N secondes. L'axe des ordonnées représente l'échelle de gradation de la qualité. La courbe montre l'impact sur la qualité subjective de toutes les perturbations subies par la séquence.

Les mesures objectives peuvent être réalisées selon diverses approches.

Le principe de l'approche qui utilise les modèles perceptuels est de simuler le comportement du système perceptuel humain (SPH) partiellement ou complètement. Sachant qu'il s'agit dans ce contexte de déterminer la qualité des signaux audiovisuels, il suffit pour cela d'évaluer la perceptibilité des erreurs. En effet, la modélisation de certaines fonctions du SPH permet de quantifier l'impact des erreurs sur les organes sensitifs de l'homme. Ces modèles agissent comme des fonctions de pondération appliquées aux signaux d'erreurs. De cette manière, l'effet de chaque dégradation est modulé proportionnellement. Le processus global permet d'évaluer objectivement la qualité des signaux transitant à travers un système audiovisuel (voir figure 3).

Des signaux de référence $S_{ref}$ représentant par exemple une séquence audiovisuelle, et des signaux $S_D$ de cette séquence, dégradés par un système audiovisuel SA, sont comparés dans un module MID d'identification des défauts, puis une note NT leur est attribuée par comparaison à un modèle MOD.

Dans l'optique du calcul du signal d'erreur, le rapport signal sur bruit peut être considéré comme un facteur de qualité. Mais on observe en pratique qu'il est peu représentatif de la qualité subjective. En effet, ce paramètre est très globalisant, et n'est donc pas à même de saisir les dégradations locales, typiques des systèmes numériques. De plus, le rapport signal sur bruit permet d'évaluer une fidélité très stricte des signaux dégradés par rapport aux originaux, ce qui est différent d'une qualité perceptuelle globale.

L'obtention d'une meilleure évaluation de qualité passe par l'utilisation des nombreuses données expérimentales sur le système perceptuel humain. Leur application est grandement facilitée, car celui-ci a été étudié pour sa sensibilité à un stimulus (ici l'erreur) dans le contexte de l'image par exemple. Dans ce cadre, on s'intéresse à la réponse du système visuel (SVH) à un contraste, et non plus à une grandeur absolue telle que la luminance.

Diverses images de test, telles que des plages uniformes de luminances, ou des fréquences spatiales ou temporelles, ont permis de déterminer expérimentalement la sensibilité du système visuel et les valeurs des contrastes juste perceptibles associés. Le SVH a une réponse d'allure logarithmique à l'intensité de la lumière, et une sensibilité optimale aux fréquences spatiales vers 5 cycles/degré. L'application de ces résultats doit toutefois se faire avec prudence, car ce sont des valeurs de seuil de visibilité. Ceci explique la difficulté de prédire l'importance de dégradations de forte amplitude.

Les modèles auditifs procèdent d'une manière similaire. Expérimentalement, la sensibilité aux différents stimulus est mesurée. Elle est appliquée par la suite aux différents signaux d'erreurs pour évaluer la qualité.

Cependant, les signaux audiovisuels sont complexes en termes de richesse de l'information. D'autre part, de manière pratique, l'utilisation de ce type de modèles pour les signaux audiovisuels soulève plusieurs problèmes. Outre le fait que les signaux de référence et dégradés doivent se trouver physiquement au même endroit, une mise en correspondance spatiale et temporelle exacte des séquences est indispensable. Cette approche peut donc trouver des applications dans l'évaluation d'équipements localisés dans le même laboratoire, tel qu'un codeur, ou dans certains cas de transmission tel que le satellite, pour lequel l'émetteur et le récepteur peuvent être dans le même local.

L'approche qui utilise les modèles paramétriques réalise une combinaison d'une série de paramètres ou d'indicateurs de dégradation retenus pour élaborer la note objective globale.

Les mesures objectives appliquées aux signaux audio et/ou vidéo sont des indicateurs du contenu des signaux et des dégradations qu'ils ont subies. En effet, la pertinence de ces paramètres dépend de leur représentativité en terme de sensibilité aux défauts.

Deux catégories d'approches sont alors possibles dans le cas de l'élaboration des paramètres :

1. catégorie I "Avec connaissance a priori du signal de référence" ;
2. catégorie II "Sans connaissance a priori du signal de référence".

La première catégorie I d'approche repose sur la réalisation de la même transformation ou du même calcul de paramètres sur le signal de référence et le signal dégradé. L'élaboration d'une note de qualité globale réside dans la comparaison des résultats issus des deux traitements. L'écart mesuré traduit les dégradations subies par le signal.

La deuxième catégorie II d'approche ne nécessite pas de connaissance sur le signal original, mais seulement de connaître les caractéristiques spécifiques des dégradations. Il est alors possible de calculer un indicateur par type de dégradation ou plus. En effet, le codage à bas débit et la diffusion perturbée des signaux de télévision numérique génèrent des défauts caractéristiques identifiables : effet de blocs, gel d'images etc. Des facteurs détectant ces défauts peuvent être élaborés et utilisés comme indicateurs de la qualité.

Exemple de modèle paramétrique :

De nombreux paramètres ont été proposés dans la littérature pour mettre en oeuvre les modèles paramétriques. L'objet de la présente invention n'est d'ailleurs pas de définir de nouveaux paramètres, mais de proposer un modèle général pour l'exploitation de ces mesures.

L'approche consiste à comparer les deux images (image de référence et image dégradée) seulement sur la base de paramètres caractéristiques de leur contenu. Le choix de ces paramètres est lié à leur sensibilité à certaines dégradations que le système à évaluer introduit. Par la suite, une mesure de qualité est construite par corrélation en utilisant une série de mesures subjectives.

Comme exemple, nous citons une technique développée par l'ITS (Institute of Telecommunication Sciences, USA). Elle repose sur l'extraction d'un paramètre spatial SI et d'un paramètre temporel TI, caractéristiques du contenu des séquences (voir figure 4). Pour plus d'informations, on se reportera à l'Article de A. A. WEBSTER et collaborateurs intitulé "An objective video quality assessment system based on humain peception" paru dans SPIE - volume 1913, pages 15-26, juin 1993.

L'information spatiale considérée comme importante est ici celle des contours. Pour une image *I* à une date *t*, le paramètre spatial *SI* est obtenu à partir de l'écart-type de l'image filtrée par les gradients de Sobel. Cette technique permet de faire ressortir les contours de l'image analysée, qui jouent un rôle important dans la vision :

$$SI_t = \sigma_{x,y}(Sobel[I_t(x,y)])$$

D'une manière analogue, l'information temporelle à un instant donné est définie par l'écart-type de la différence de deux images consécutives :

$$TI_t = \sigma_{x,y}(I_t(x,y) - I_{t-1}(x,y)]))$$

Une mesure basée sur ces deux informations permet de mettre en valeur le changement de contenu entre l'entrée du système vidéo ($S_{ref}$) et sa sortie ($S_s$), par différentes comparaisons.

$$M_1 = \log_{10}\left[\frac{TI_S(t)}{TI_{Ref}(t)}\right]$$

$$M_2 = \left[\frac{SI_{Ref}(t) - SI_S(t)}{SI_{Ref}(t)}\right]$$

$$M_3 = \left[TI_S(t) - TI_{Ref}(t)\right]$$

Trois paramètres $M_1$, $M_2$, $M_3$, sont tirés de ces comparaisons dans un comparateur COMP. Chacun est sensible à une ou plusieurs dégradations. Ainsi, par la comparaison des paramètres *SI*, on prend en compte l'introduction de flou (baisse de *SI*) et les contours artificiels introduits par l'effet de blocs (augmentation de *SI).* De même, des différences entre les deux versions de *TI* révèlent des défauts de codage du mouvement.

L'étape suivante consiste à effectuer une sommation sur le temps pour $M_1$, $M_2$, $M_3$ par l'une des normes de Minkowski *Lp* (en général, *p=1*, *2* ou $_\infty$). De cette manière, la construction du modèle de sommation est possible. Il permet de produire une note de qualité à la sortie d'un module de sommation SMOD. Le modèle choisi est une combinaison linéaire des $M_i$ :

$$Q = \alpha + \beta M_1 + \gamma M_2 + \mu M_3$$

Les coefficients de pondération (α, β, γ, μ) sont calculés par une procédure itérative MIN de minimisation de la distorsion entre les notes objectives Q et les notes subjectives obtenues sur le même lot d'images. En effet, il s'agit de trouver par itération les paramètres du modèle combinatoire. De cette manière, la mesure objective estimée approchera au mieux la note subjective. L'indice de performance du modèle est donné par le coefficient de corrélation.

Un exemple de modèle a été proposé dans la littérature. Il a permis d'obtenir un bon coefficient de corrélation : 0,92.

$$Q = 4{,}77 - 0{,}992M_1 - 0{,}272M_2 - 0356M_3$$

Toutefois, il semble que les performances des modèles combinatoires soient moins bonnes avec des images différentes de celles du lot ayant servi à mettre le modèle au point.

La mise en oeuvre de cette approche est moins contraignante que la précédente. Toutefois, il reste en pratique la difficulté de la mise en correspondance spatiale et temporelle des notes des deux séquences du signal.

Un objet de l'invention est un procédé qui permette une bonne mise en correspondance entre des mesures objectives et des notations subjectives que donnerait un panel de spectateurs.

Un autre objet de l'invention est un procédé permettant une évaluation de séquence audiovisuelle de manière absolue, c'est-à-dire sans avoir accès à une séquence d'origine non dégradée.

Un autre objet de l'invention est un procédé qui permette de manière simple et efficace d'évaluer la qualité de signaux audiovisuels dans un réseau de télédiffusion de signaux audio et/ou vidéo.

*L'article de QUINCY E.A. et al. Intitulé : « Expert Pattern Recognition method for technology independent classification of vidéo transmission quality » GLOBECOM'88, IEEE Global Telecommunications Conference and Exhibition - Communications for the information age - Conference Record (IEEE Cat. N° 88CH2535-3), Hollywood, FL. USA, 28 NOV.-1 Dec. 1988, pages 1304-1308 vol. 3, XP002133255 New York, USA, concerne un procédé d'évaluation de la qualité d'une séquence audiovisuelle. Dans le procédé décrit dans ce document, la détermination de la qualité est effectuée par des systèmes experts qui utilisent entre autres une base de données fondée sur des probabilités.*

Au moins un des buts précités est atteint par un procédé d'évaluation de la qualité d'une séquence audiovisuelle, caractérisé en ce qu'il met en oeuvre :

a) un apprentissage comprenant l'attribution dune note subjective $NS_i$ à chacune de $N_o$ séquences d'apprentissage $S_i$ (avec = 1,2...$N_o$) présentant des dégradations identifiées par un vecteur d'apprentissage $MO_i$ qui est affecté à chaque séquence $S_i$ selon un premier procédé de vectorisation, pour constituer une base de données composée des $N_o$ vecteurs d'apprentissage $MO_i$ et des notes subjectives $NS_i$ ;
b) le classement des $N_o$ vecteurs d'apprentissages $MO_i$ en $k$ classes de notes en fonction des notes subjectives $NS_i$ qui leur ont été attribuées, pour former $k$ ensembles d'apprentissage $EA_j$ (avec $j$ = 1,2...$k$) auxquels sont attribués $k$ notes d'apprentissage significatives $NSR_j$.;
c) pour ladite séquence audiovisuelle à évaluer l'élaboration d'un vecteur *MO* selon ledit premier procédé de vectorisation ;
d) attribution à la séquence audiovisuelle à évaluer de la note d'apprentissage significative $NSR_j$, correspondant à l'ensemble d'apprentissage EAj le plus proche.

Cette attribution peut être réalisée par exemple en attribuant à la séquence la note correspondant au vecteur d'apprentissage le plus proche.

Préférentiellement, on réalise entre b) et c) :

b1) pour chaque ensemble d'apprentissage $EA_J$, l'élaboration selon un deuxième procédé de vectorisation d'un dictionnaire de référence $D_J$ composé de $N_j$ vecteurs de référence $VR_1$ (avec $l$ = 1,2...$N_J$) ;

et entre c) et d) :

c1) le choix parmi les vecteurs de référence $VR_1$ des $k$ dictionnaires de référence, du vecteur de référence $VR_e$, le plus proche dudit vecteur *MO.*

Dans ce cas, l'attribution s'effectue à partir de la note d'apprentissage significative $NSR_j$ correspondant au dictionnaire de référence auquel appartient ledit vecteur de référence $VR_e$ le plus proche.

Les notes d'apprentissage significatives $NSR_j$ peuvent être réparties de manière uniforme le long d'une échelle de notation, ou mieux encore de manière non uniforme, ce qui permet de rendre les mesures plus significatives, par exemple par le fait que certains au moins des dictionnaires de référence peuvent alors contenir sensiblement le même nombre de vecteurs de référence.

Selon un mode de réalisation préféré, la répartition des notes d'apprentissage significatives *NSRj* s'effectue par apprentissage.

Le procédé est alors caractérisé en ce qu'il comprend, entre a et b, une identification des *k* notes d'apprentissage significations $NSR_j$, à partir des notes subjectives $NS_i$ dont chacune est considérée comme un vecteur à une dimension, en recherchant une distance minimale entre l'ensemble des $N_o$ notes subjectives $NS_i$ et les *k* notes d'apprentissage significatives.

D'autres caractéristiques et avantages de l'invention apparaîtront mieux avec la description qui va suivre et les dessins qui l'accompagnent et dans lesquels :

- la figure 1 et la figure 2 illustrent les deux méthodes d'évaluation de l'Art Antérieur, respectivement dénommés DSCQS et SSCQE ;
- la figure 3 illustre une approche connue mettant en oeuvre des modèles perceptuels ;
- la figure 4 illustre une méthode développée par l'ITS ;
- la figure 5 illustre une réalisation préférée de la mise en oeuvre de l'invention ;
- la figure 6 illustre la formation d'un dictionnaire $D_j$ selon l'invention ;
- la figure 7 illustre le processus de notation d'une séquence à évaluer, selon l'invention ;
- la figure 8 illustre une répartition uniforme des intervalles de notes subjectives ;
- la figure 9 est un exemple de la fréquence d'apparition des notes subjectives $NS_i$ ;
- la figure 10 illustre un processus d'identification de notes subjectives représentatives selon l'invention ;
- la figure 11 est un exemple de répartition non uniforme des notes subjectives obtenues selon le processus illustré par la figure 10 ;
- les figures 12 et 13 illustrent la précision d'une évaluation selon l'invention ;
- et les figures 14 et 15 représentent une mise en oeuvre de l'invention en ce qui concerne respectivement la phase d'apprentissage et la phase opérationnelle.

L'invention se présente comme un procédé d'évaluation objective de la qualité des signaux audio et vidéo basée sur un ensemble de paramètres.

Le procédé ne nécessite pas de définir de nouveaux paramètres. Son idée de base est de proposer un modèle général basé sur la quantification vectorielle pour l'exploitation de ces mesures. Il s'agit d'une approche par apprentissage qui permet de donner des notes objectives de qualité aux signaux audiovisuels. Cette évaluation est effectuée de manière corrélée à la notation subjective à l'aide d'un modèle perceptuel objectif. Pour ce faire, le modèle opère en deux étapes.

La première étape est réalisée à partir d'un ensemble de séquences audiovisuelles d'apprentissage. Le modèle effectue une mise en correspondance entre deux bases de données élaborées sur les mêmes signaux audiovisuels :

■ une base de notes subjectives (BDNS),
■ une base de mesures objectives extraites des signaux audio et vidéo (BDMO),

pour associer à un ensemble d'indicateurs de dégradations (formant un vecteur de mesures objectives), une notation subjective.

Cette phase permet d'obtenir une connaissance pertinente pour la qualification de la qualité des signaux.

Pendant la seconde étape, qui correspond à la phase opérationnelle du procédé, ce dernier effectue une exploitation de ses connaissances. En effet, à chaque fois qu'il est nécessaire de qualifier la qualité d'une séquence audiovisuelle, le modèle réalise une extraction de paramètres représentatifs des dégradations. Par la suite, il confronte le résultat des calculs à sa base de connaissance. Cette opération permet de donner une note objective très proche de la note subjective qu'aurait pu donner un panel représentatif. Le processus utilisé dans la présente invention utilise la quantification vectorielle. Le principe est de trouver dans les dictionnaires le vecteur représentatif le plus proche du vecteur de paramètres calculés sur les signaux audio et vidéo. La note subjective générée peut par exemple être celle qui est associée au dictionnaire contenant le vecteur représentatif les plus proche.

La problématique de la quantification vectorielle a été identifiée dans la littérature. Elle se résume par la définition de ses trois composantes principales interdépendantes :

■ la formation de vecteurs à partir des informations à coder,
■ la formation du dictionnaire à partir d'un ensemble d'apprentissage,
■ la recherche du plus proche voisin à l'aide d'une distance appropriée.

La notion de distance ou distorsion entre deux vecteurs est introduite pour la recherche du plus proche voisin dans le dictionnaire. Plusieurs distances ont été proposées pour optimiser la quantification vectorielle et pour approcher au maximum la fidélité aux signaux initiaux.

La distance ou distorsion appelée erreur quadratique, est parmi celles qui sont les plus utilisées pur la quantification vectorielle. L'appellation distance ici n'est pas exacte, il s'agit, en fait, du carré d'une distance au sens mathématique du terme.

$$\Delta(A,B) = \sum_{j=1}^{t}' (A_j - B_j)^2$$

($A,B$) deux vecteurs de dimension $t$.

La quantification vectorielle est utilisée dans le cadre de la présente invention pour élaborer un modèle perceptuel objectif: Ce modèle sera exploité pour quantifier la qualité des signaux audiovisuels.

Soit un ensemble E de $N_o$ séquences audio $S_i$ de n secondes chacune. Elles sont toutes composées d'une série d'images vidéo et d'échantillons audio.

$$E=\{S_I/i=..N_o\}$$

Ces séquences ont transité à travers des configurations représentatives des systèmes de distribution de la télévision numérique. En effet, les réseaux de distribution et de diffusion mis en oeuvre sont le satellite, le câble et le réseau terrestre. Des perturbations ont été introduites lors de la transmission des signaux audiovisuels afin de les dégrader.

Nous avons réalisé des essais subjectifs sur cet ensemble de séquences dégradées. Une base de données de notes subjectives a été élaborée.

$$BDES=\{NS_i/i=1..N_o\}$$

$NS_i$ représente la Note Subjective obtenue par la séquence $S_i$ de l'ensemble $E$.

D'autre part, nous avons élaboré une autre base de données à partir des Mesures Objectives $MO_i$ réalisées sur l'ensemble des séquences $E$.

$$BDMO=\{MO_i/i=1..N_o\}$$

$$\text{Avec } MO_i=(V_I,.., V_t)$$

A chaque séquence $S_i$ correspond un vecteur $MO_i$ (voir figure 5). Ces vecteurs sont composés de $t$ paramètres $V_j$ calculés sur les signaux audio et/ou vidéo. Ces paramètres peuvent être comparatifs (catégorie I) ou intrinsèques (catégorie II). Ils informent sur le contenu et sur les dégradations subies par la séquence.

Afin de former pour chaque séquence audiovisuelle $S_i$ son vecteur représentatif $MO_i$, un procédé distinct calcule des paramètres objectifs extraits à partir des échantillons des signaux numériques audio et vidéo.

A partir des données que nous avons décrites, le procédé opère une phase d'apprentissage. En effet, un traitement adapté de ces données permet de développer une base de connaissance que le modèle utilisera par la suite dans sa phase opérationnelle.

Pour l'ensemble E des séquences $S_i$, une répartition en $k$ classes de notes $EA_j$ est effectuée. Pour cela, on utilise la valeur de la note subjective $NS_i$ attribuée à la séquence $S_i$. L'intervalle d'évolution de $NS_i$ est-donc fragmenté en $k$ segments $I_J$ distincts auxquels sont associés les $k$ ensembles d'apprentissage $EA_J$. Une note subjective représentative $NSR_J$ est associée à chaque segment j. Cette opération se traduit par un groupement dans chaque classe de note $EA_J$ des données concernant les séquences dont la qualité a été jugée similaire ou équivalente.

La valeur $k$ (par exemple $k$=5) est prise ici comme exemple d'application dans la Figure 5. Une répartition sur un nombre de classes inférieur ou supérieur est envisageable en fonction des besoins de précision de l'équipement de métrologie.

Les vecteurs $MO_i$ de mesures objectives des séquences $S_i$ correspondant à un intervalle $I_j$ de valeurs de notes subjectives $NS_i$ sont rassemblés dans l'ensemble d'apprentissage $EA_j$. $k$ ensembles d'apprentissage sont alors formés à partir des bases de données initiales (cf. Figure 5).

A partir d'un ensemble d'apprentissage de M vecteurs, le dictionnaire de référence, composé de N vecteurs, est celui qui représence le mieux l'ensemble vectoriel initial. Il emploie un groupe de vecteurs présentant la plus petite distance ou distorsion moyenne par rapport à tous les M vecteurs de l'ensemble d'apprentissage, parmi les autres dictionnaires candidats possibles. La construction du dictionnaire est basée sur la formation des meilleurs vecteurs représentatifs.

Des algorithmes de classification sont utilisés, de façon à élaborer un dictionnaire de vecteurs représentatifs à partir d'un ensemble initial ; ce dernier est appelé "training set" ou ensemble d'apprentissage.

Plusieurs auteurs ont proposé des solutions pour la classification en dictionnaires.

- Nuées dynamiques, ou Algorithme LBG,
- Méthode du réseau de neurones de Kohonen.

Pour chaque classe de notes $EA_j$ et à partir des vecteurs $MO_i$ de mesures objectives et de leurs notes $NS_i$ (voir figure 6), on applique une procédure FORM de formation d'un dictionnaire $D_j$.

$k$ dictionnaires $D_j$, composés respectivement de $N_j$ vecteurs sont associés aux $k$ classes ou plages de notes subjectives. La valeur de $N_j$ est choisie suivant le nombre initial de vecteurs de la classe de notes $EA_j$ et selon la précision souhaitée pour le modèle. Chaque dictionnaire $D_j$ est donc associé à un intervalle $I_j$ des notes subjectives.

Les algorithmes utilisés pour la formation des dictionnaires $D_j$ sont le LBG et les réseaux de neurones Kohonen. Ces méthodes donnent des résultats comparables. Ces techniques sont d'autant plus efficaces que malgré des tailles $N_j$, choisies expressément limitées (par exemple $N_j$ = ...), les dictionnaires de référence restent représentatifs.

Le but d'un dispositif automatique d'évaluation de la qualité des signaux est de fournir une note finale d'évaluation desdits signaux. Dans sa phase opérationnelle de fonctionnement le procédé décrit dans la présente invention se décline suivant deux processus (voir figure 7).

Le premier réside dans le traitement des échantillons audio et/ou vidéo de la séquence audiovisuelle à évaluer SAE afin d'en extraire les paramètres. En effet, un vecteur $V_i$ d'indicateurs de la qualité de l'audio et/ou de la vidéo est formé suivant les catégories I et/ou II décrites précédemment. Il permet de représenter les caractéristiques pertinentes pour la qualification des signaux.

Le second processus (QUANT) fait correspondre par qualification vectorielle au vecteur $V_i$ de paramètres en entrée qui est attribué à une séquence audiovisuelle à évaluer, l'indice $j$ du dictionnaire le plus proche. A cet effet, la minimisation de la distorsion entre le vecteur incident et tous les vecteurs des $k$ dictionnaires -est opérée. Elle permet d'identifier le dictionnaire $D_j$ auquel appartient le vecteur $U$ le plus proche de $V_i$, et donc l'indice $j$.

L'opération utilisée de manière avantageuse dans cette approche, est la quantification vectorielle. Elle permet de trouver le plus proche voisins d'un vecteur $V_i$ et par conséquent son meilleur représentant dans un dictionnaire ou dans un ensemble de dictionnaires. A un vecteur d'entrée $V_i$ présenté, la quantification vectorielle détermine à quel vecteur de quel dictionnaire il est le plus proche, et attribue à ce vecteur la note d'apprentissage significative $NSR_j$ de ce dictionnaire $D_j$.

Rappelons, que l'indice $j$ n'est autre que la classe de qualité obtenue à la suite d'une gradation des essais subjectifs opérés sur les séquences audiovisuelles. Pour cette technique de séparation en plusieurs ensembles d'apprentissage, il y a deux points importants à étudier :

- la taille de chaque dictionnaire
- la position des plages de notes de chaque dictionnaire.

La taille de chacun des dictionnaires présente une certaine importance. En effet, le nombre de vecteurs influence directement la représentativité du dictionnaire, et par conséquent l'efficacité de la quantification vectorielle.

D'autre part, la position des plages de notes est tout aussi importante. Il faut savoir quelles notes on va associer entre elles. On peut par exemple réserver une grande plage de notes pour la mauvaise qualité, ainsi dès que la qualité se dégrade un minimum, le quantificateur le détectera. On peut aussi faire le contraire, en réservant une petite plage pour la mauvaise qualité, avec ceci le quantificateur ne détectera la mauvaise qualité vidéo uniquement que si celle-ci est fortement dégradée.

On voit donc, qu'à l'aide de ces deux paramètres, on peut influencer la quantification vectorielle. On peut aussi influencer cette quantification en ajoutant un prétraitement sur les paramètres objectifs calculés à partir des signaux audio et/ou vidéo.

Nous avons défini ci-dessus le fonctionnement du procédé en trois étapes principales : d'abord la formation des mesures objectives $MO_i$, puis la construction des dictionnaires $D_j$, et enfin la recherche du dictionnaire dans lequel se trouve le vecteur le plus proche d'un vecteur de mesures objectives. Le modèle peut alors attribuer à la séquence Si, représentée par les mesures objectives $MO_i$, la note subjective représentative $NSR_j$ associée au dictionnaire $D_j$,

en utilisant sa base de connaissances. Cependant, un processus de choix éventuel des plages de l'échelle de notes subjectives n'a pas été défini, ni celui de choix de la note représentative $NSR_j$ associée à chaque dictionnaire $D_j$. Le partitionnement de l'échelle de la note subjective est une étape importante, car il va définir les notes que le modèle sera capable de fournir lors de la phase opérationnelle.

Selon ce qui a été défini précédemment, chaque classe est définie par l'ensemble d'apprentissage $EA_J$ de mesures objectives, et un intervalle $I_j$ de l'échelle des notes subjectives $NS_i$.

Dans le cas de tests subjectifs à échelle de notation discrète, le nombre de notes représentatives et de plages correspondantes est naturellement limité par le nombre de niveaux que peut prendre la note (en général 5 niveaux).

Dans le cas de tests subjectifs à échelle de notation continue les possibilités sont beaucoup plus variées : le nombre d'ensembles d'apprentissage peut être quelconque. Deux approches sont alors possibles : soit les intervalles $I_j$ de notes subjectives sont choisis arbitrairement, soit une procédure automatique qui permet de choisir des intervalles $I_j$ est appliquée.

**Partitionnement arbitraire**

Un choix arbitraire des intervalles de notes subjectives $NS_i$ (voir figure 8, pour une répartition uniforme) a l'avantage de ne nécessiter aucune ressource particulière lors de l'implantation matérielle de l'invention dans un équipement. Cependant, ce partitionnement qui ne tient pas compte de la répartition effective des notes subjectives pour les séquences de l'ensemble E (figure 9) risque de définir certains intervalles qui ne contiendront pas ou très peu de notes subjectives $NS_i$, alors qu'un seul intervalle pourra contenir la plupart des notes.

Une telle répartition inégale des notes subjectives entre les intervalles a un double inconvénient pour le modèle :

1. En premier lieu, quelle que soit la taille des dictionnaires et la sensibilité des paramètres *V1..t* aux dégradations, l'écart entre la note subjective prédite et la note subjective réelle ne peut pas être minimisé. En effet, la phase opérationnelle associe à tout vecteur *V1..t* de paramètres objectifs la note $NSR_p$ du dictionnaire $D_p$ le plus proche. L'intervalle de notes subjectives représenté par $NSR_p$ étant d'une certaine largeur de l'intervalle, l'écart moyen ne pourra pas descendre en dessous d'un certain seuil, fonction de la largeur de l'intervalle. Dans le cas où l'ensemble d'apprentissage $EA_p$ correspondant contient la plus grande partie des séquences Si, le modèle va très fréquemment utiliser la note $NSR_p$ et donc commettre fréquemment une erreur nominale. La performance moyenne du modèle pour cette classe *p* de notes sera donc limitée par cette largeur d'intervalle, et serait améliorée en réduisant l'intervalle. Par conséquent, pour la classe *p* représentant la plus grande partie des séquences $S_i$, c'est la performance moyenne du modèle qui est limitée.

   On voit donc qu'un partitionnement en intervalles plus petits dans les zones denses au sens du nombre de notes subjectives obtenues dans la base de données DBNS est avantageux.

2. En second lieu, une approche arbitraire pour le partitionnement peut amener à avoir un nombre global non optimal de vecteurs pour les dictionnaires. Nous avons vu que pour ce type de partitionnement, les ensembles d'apprentissage . $EA_j$ formés pourront être de tailles très différentes. Il s'ensuit que, pour un ensemble d'apprentissage $EA_p$ de taille importante, l'algorithme de la phase de classification aura besoin de beaucoup de vecteurs dans le dictionnaire $D_p$, pour parvenir à représenter $EA_p$ avec une distorsion voulue. Cela est dû à la grande diversité des données à représenter. Un partitionnement garantissant de ne pas obtenir de déséquilibre important quant à la taille des ensembles d'apprentissage peut résoudre ce point Par ailleurs, il n'est pas certain que la taille plus modeste des autres ensembles d'apprentissage permette de réduire la taille de leurs dictionnaires. L'ensemble se traduirait donc par une augmentation des coûts d'implantation matérielle de la méthode, ainsi que par une diminution de la précision du modèle.

Une réponse partielle à ces inconvénients est de faire un partitionnement de manière empirique, à chaque fois qu'un ensemble E de séquences est étudié. Pour cela on s'efforcera donc de partitionner plus finement l'échelle des notes aux endroits où le nombre de notes $NS_i$ est important.

Toutefois, il est bien plus intéressant d'appliquer une procédure automatique, qui permettra de plus de faire un partitionnement optimal, en mettant en oeuvre un partitionnement automatique qui s'adapte à la répartition statistique des notes subjectives attribuées à l'ensemble E des séquences $S_i$.

En effet, on a vu qu'un partitionnement arbitraire n'est a priori pas adapté à la répartition des notes subjectives $NS_i$ le long de l'échelle de notation subjective. Bien que l'ensemble *E* des séquences d'apprentissage soit représentatif des dégradations, on observe généralement que la répartition des valeurs de $NS_i$ est effectivement loin d'être uniforme, par exemple dans le cas de la télévision numérique. La figure 9 présente la fréquence d'occurrence des notes subjectives $NS_i$ : on observe que beaucoup de notes sont proches d'un niveau de qualité élevé. Les classes de haute qualité pourront donc représenter la grande majorité des notes alors que la classe la plus basse sera presque vide.

L'utilisation d'une procédure automatique de partitionnement optimal garantissant une répartition plus équitable de cet ensemble *DBNS* de notes subjectives va permettre d'obtenir une meilleure performance du modèle final.

Ce problème est avantageusement résolu par un procédé constitué de deux étapes : tout d'abord une identification de *k* notes subjectives représentatives $NSR_j$, puis le choix de la note subjective $NSR_j$ représentant le mieux une note subjective *NSi.*

1. Une identification des *k* notes subjectives représentatives $NSR_j$ est effectuée à partir des notes subjectives $NS_i$ (figure 10). Le procédé considère que chaque note $NS_i$ est un vecteur à une dimension, afin d'appliquer un processus d'élaboration d'un dictionnaire de référence). Une des méthodes LBG, nuées dynamiques, ou réseau de neurones de Kohonen est utilisée afin d'obtenir le nombre désiré *k* de représentants $NSR_j$.
   Ce type de méthode tend à rechercher le minimum de distorsion, au sens de la distance $\Delta$ entre l'ensemble des $NS_i$ et des $NSR_j$. Il répond donc parfaitement aux inconvénients du positionnement dit arbitraire.
2. La classification de l'ensemble d'apprentissage DBMO en *k* ensembles $EA_j$. Pour cela, on considère les couples de données ($MO_i$, $NS_i$), chacun correspondant à une séquence Si. Pour chaque couple, on recherche la note subjective représentative $NSR_j$ la plus proche de $NS_i$ par application de la procédure de quantification vectorielle, ce qui permet de déterminer l'indice *j*. Le vecteur de données objectives $MO_i$ est alors ajouté à l'ensemble d'apprentissage $EA_j$. La création des ensembles $EA_j$ dans lesquels sont répartis les vecteurs $MO_i$ est terminée lorsque tous les couples ($MO_i$, $NS_i$) ont été traités.

Un exemple de partitionnement optimal de l'échelle de notation subjective est donné en figure 11 et illustre la différence avec la figure 8.

Le modèle est ici utilisé afin d'illustrer ses possibilités sur un programme de télévision numérique contenant des dégradations. Les notes subjectives ont été obtenues selon le protocole SSCQE, c'est-à-dire une note toutes les demi-secondes. On considère alors que le programme est constitué d'une série d'autant de courtes séquences $S_i$ d'une demi-seconde, que de notes.

La figure 12 montre l'évolution conjointe de la note subjective NS sur une demi-heure. On constate que la note objective attribuée NSR suit précisément la note subjective NS (en pointillés).

La figure suivante 13 montre de manière synthétique la correspondance entre la note prédite par le modèle et la note subjective réelle, pour la même expérience, ainsi que la précision du modèle. On distingue 7 classes, qui correspondent à autant de valeurs de notes prédites (note objective $N\overline{S}$ en abscisse, note subjective *NSR* en ordonnée).

Pour chaque classe, le graphique représente la moyenne des notes subjectives réelles (Moy) données par les observateurs. On constate la bonne linéarité de la correspondance entre les deux notes, ce qui est un premier critère de performance.

La moyenne des notes subjectives réelles (Moy) est également encadrée par deux autres repères (EcartT). Pour chaque classe, ces repères indiquent l'amplitude, par rapport à la moyenne, de l'écart-type des notes subjectives correspondant à la note objective de la classe. Une faible valeur signifie que le modèle est précis. Les valeurs obtenues pour cet écart-type sont comparables aux performances des tests subjectifs qui constituent la référence pour le modèle, ce qui est tout à fait satisfaisant.

Un mode de mise en oeuvre de l'invention va maintenant être décrit, en liaison avec les figures 14 et 15.

Afin d'évaluer la qualité de signaux audiovisuels, le procédé met donc en oeuvre deux phases : une phase d'apprentissage (figure 14) et une phase opérationnelle (figure 15).

La phase d'apprentissage est effectuée une seule fois. Elle consiste à obtenir les *k* dictionnaires *Dj* de vecteurs de mesures objectives, et les notes subjectives représentatives $NSR_j$ associées. Cette phase est réalisée à partir :

- d'une part, de la Base de Données de Mesures Objectives (*BDMO*), obtenue à partir de signaux audio et/ou vidéo et d'un processeur (non représenté) de calcul de paramètres (*MO*, Mesures Objectives).
- d'autre part, d'une Base de Notes Subjectives (*DBNS*) obtenue à partir des mêmes signaux audio et/ou vidéo que la base *BDMO* et d'un ensemble d'observateurs.

La phase d'apprentissage peut se décomposer en 3 étapes :

1. Un processeur de construction du dictionnaire permet de trouver les *k* notes subjectives $NSR_j$, représentatives de la base *BDNS.*
2. Chaque vecteur de la base *BDMO* est ajouté à l'un des *k* ensembles d'apprentissage $EA_j$ en fonction de la classe *j* à laquelle appartient la note *NS* de la base *BDNS* correspondant au vecteur. La classe *j* est obtenue grâce à un processeur de quantification vectorielle qui recherche la note $NSR_j$ la plus proche de la note *NS.*
3. Enfin, chaque dictionnaire $D_j$ (dicol, ... dicok), composé de $N_j$ vecteurs est obtenu à partir de l'ensemble d'apprentissage $EA_j$ correspondant, grâce à un processeur de constructions de dictionnaire.

La phase opérationnelle est ensuite appliquée à chaque fois que la qualité d'une séquence audiovisuelle doit être prédite. Cette phase exploite la connaissance acquise par le modèle au cours de la phase d'apprentissage. Pour un vecteur de paramètres objectifs *MO* issu d'une séquence audiovisuelle, on calcule une note objective de qualité. Les paramètres objectifs *MO* sont fournis par un processeur de calcul de paramètres qui peut être quelconque.

Cette phase opérationnelle peut alors se décomposer en deux étapes :

1. Un processeur de quantification vectorielle recherche le vecteur *U* le plus proche du vecteur de paramètres objectifs MO en entrée, parmi tous les vecteurs des dictionnaires $D_j$ (dicol, ... dicok) obtenus lors de la phase d'apprentissage. Le processeur fournit alors le numéro *j* du dictionnaire correspondant.
2. L'étape suivante peut alors attribuer à la séquence audiovisuelle la note de qualité de valeur $NSR_j$.

## Revendications

**1.** Procédé d'évaluation de la qualité d'une séquence audiovisuelle, **caractérisé en ce qu'**il met en oeuvre :

a) un apprentissage comprenant l'attribution d'une note subjective $NS_i$ à chacune de $N_o$ séquences d'apprentissage $S_i$ (avec $i$ = 1,2...$N_o$) présentant des dégradations identifiées par un vecteur d'apprentissage $MO_i$ qui est affecté à chaque séquence $S_i$ selon un premier procédé de vectorisation, pour constituer une base de données composée des $N_o$ vecteurs d'apprentissage $MO_i$ comportant seulement lesdites dégradations identifiées et des notes subjectives $NS_i$ ;
b) le classement des $N_o$ vecteurs d'apprentissage $MO_i$ en *k* classes de notes en fonction des notes subjectives $NS_i$ qui leur ont été attribuées, pour former *k* ensembles d'apprentissage $EA_j$ (avec *j* = 1,2...*k*) auxquels sont attribués *k* notes d'apprentissage significatives $NSR_j$.;
c) pour ladite séquence audiovisuelle à évaluer l'élaboration d'un vecteur *MO* selon ledit premier procédé de vectorisation ;
d) attribution à la séquence audiovisuelle à évaluer de la note d'apprentissage significative $NSR_j$, correspondant à l'ensemble d'apprentissage EAj contenant le vecteur le plus proche du vecteur MO au sens de la quantification vectorielle.

**2.** Procédé selon la revendication 1, **caractérisé en ce qu'**il comporte entre b) et c) :

b1) pour chaque ensemble d'apprentissage $EA_j$, l'élaboration par quantification vectorielle selon un deuxième procédé de vectorisation d'un dictionnaire de référence $D_j$ composé de $N_j$ vecteurs de référence $VR_l$ (avec $l$ = 1 ,2...$N_j$) ;

et entre c) et d) :

c1) le choix parmi les vecteurs de référence $VR_l$ des *k* dictionnaires de référence, du vecteur de référence $VR_e$, le plus proche dudit vecteur *MO* ;

et **en ce que** d met en oeuvre l'attribution à la séquence audiovisuelle à évaluer de la note d'apprentissage significative $NSR_j$, correspondant au dictionnaire de référence auquel appartient ledit vecteur de référence $VR_l$ le plus proche.

**3.** Procédé selon une des revendications 1 ou 2, **caractérisé en ce que** les notes d'apprentissage significatives $NSR_j$ sont réparties de manière uniforme le long de l'échelle de notation.

**4.** Procédé selon la revendication 1, caractérisé en ce les notes d'apprentissages significatives $NSR_j$ d'au moins certains des *k* dictionnaires de référence sont réparties de manière non uniforme le long de l'échelle de notation.

**5.** Procédé selon la revendication 4, **caractérisé en ce que** ladite répartition est telle qu'au moins certains des dictionnaires de référence contiennent sensiblement le même nombre de vecteurs de référence.

**6.** Procédé selon une des revendications 4 ou 5, **caractérisé en ce qu'**il comprend, entre a et b, une identification des *k* notes d'apprentissage significations $NSR_j$, à partir des notes subjectives $NS_i$ dont chacune est considérée comme un vecteur à une dimension, en recherchant une distance minimale entre l'ensemble des $N_o$ notes subjectives $NS_i$ et les $k$ notes d'apprentissage significatives.

## Patentansprüche

**1.** Verfahren zur Qualitätsbeurteilung einer audiovisuellen Sequenz, **dadurch gekennzeichnet, dass** es anwendet:

a) einen Lernprozess, welcher die Zuordnung einer subjektiven Beurteilung $NS_i$ zu jeder von $N_0$ Lernprozesssequenzen $S_i$ (mit $i$ = 1, 2...$N_0$), welche durch einen Lernprozessvektor $MO_i$, welcher für jede Sequenz $S_i$ gemäß einem ersten Vektorisierungsverfahren bereitgestellt ist, bezeichnete Beeinträchtigungen aufweisen, umfasst, um eine aus $N_0$ Lernprozessvektoren $MO_i$, welche nur die bezeichneten Beeinträchtigungen und die subjektiven Beurteilungen $NS_i$ beinhalten, zusammengesetzte Datenbasis zu bilden,

b) die Klassifizierung der $N_0$ Lernprozessvektoren $MO_i$ in $k$ Beurteilungsklassen in Abhängigkeit von dem ihnen zugeordneten subjektiven Beurteilungen $NS_i$, um $k$ Lernprozesseinheiten $EA_j$ (mit $j$ = 1, 2...k) zu bilden, welchen $k$ signifikante Lernprozessbeurteilungen $NSR_j$ zugeordnet sind,

c) die Erarbeitung eines Vektors *MO* gemäß dem ersten Vektorisierungsverfahren für die zu beurteilende audiovisuelle Sequenz,

d) Zuordnung derjenigen signifikanten Lernprozessbeurteilung $NSR_j$ zu der zu beurteilenden audiovisuellen Sequenz, welche der Lernprozesseinheit EAj entspricht, welche den im Sinne der vektoriellen Quantifizierung dem Vektor MO ähnlichsten Vektor enthält.

**2.** Verfahren nach Anspruch 1, **dadurch gekennzeichnet, dass** es zwischen b) und c) umfasst:

bl) die Ausarbeitung eines Referenzlexikons $D_j$ für jede Lernprozesseinheit $EA_j$, zusammengesetzt aus $N_j$ Referenzvektoren $VR_l$ (mit $l$ = 1, 2 ...$N_j$), durch vektorielle Quantifizierung gemäß einem zweiten Vektorisierungsverfahren,

und zwischen c) und d):

cl) die Auswahl des dem Vektor *MO* ähnlichsten Referenzvektors $VR_e$, unter den Referenzvektoren $VR_l$ der $k$ Referenzlexika,

und dadurch, dass es die Zuordnung der dem Referenzlexikon, zu dem der ähnlichste Referenzvektor $VR_l$ gehört, entsprechenden signifikanten Lernprozessbewertung $NSR_j$ zu der zu beurteilenden audiovisuellen Sequenz durchführt.

**3.** Verfahren nach Anspruch 1 oder 2, **dadurch gekennzeichnet, dass** die signifikanten Lernprozessbeurteilungen $NSR_j$ in gleichförmiger Weise entlang der Beurteilungsskala aufgeteilt sind.

**4.** Verfahren nach Anspruch 1, **dadurch gekennzeichnet, dass** die signifikanten Lernprozessbeurteilungen $NSR_j$ zumindest bestimmter der $k$ Referenzlexika in ungleichmäßiger Weise entlang der Beurteilungsskala aufgeteilt sind.

**5.** Verfahren nach Anspruch 4, **dadurch gekennzeichnet, dass** die Aufteilung derart ist, dass zumindest bestimmte der Referenzlexika im Wesentlichen die gleiche Anzahl an Referenzvektoren enthalten.

**6.** Verfahren nach Anspruch 4 oder 5, **dadurch gekennzeichnet, dass** es zwischen a) und b) eine Identifizierung der $k$ signifikanten Lernprozessbeurteilungen $NSR_j$ umfasst, ausgehend von subjektiven Beurteilungen $NS_i$, von denen jede als eindimensionaler Vektor angesehen wird, indem ein minimaler Abstand zwischen der Menge der $N_0$ subjektiven Beurteilungen $NS_i$ und den $k$ signifikanten Lernprozessbeurteilungen ermittelt wird.

## Claims

1. A method of evaluating an audiovisual sequence, the method being **characterized in that** it implements:

   a) training, comprising allocating a subjective score $NS_i$ to each of $N_0$ training sequences $S_i$ (where i = 1, 2, ..., $N_0$) presenting degradations identified by a training vector $MO_i$ which is given to each sequence $S_i$ in application of a first vectorizing method, in order to build up a database of $N_0$ training vectors $MO_i$ including only said identified degradations and subjective scores $NS_i$;
   b) classifying the $N_0$ training vectors $MO_i$ into $\underline{k}$ classes of scores as a function of the subjective scores $NS_i$ that have been allocated to them, so as to form $\underline{k}$ training sets $EA_j$ (where j = 1, 2, ..., k) which have $\underline{k}$ significant training scores $NSR_j$ allocated thereto;
   c) for each audiovisual sequence to be evaluated, generating a vector MO using said first vectorization method; and
   d) allocating to the audiovisual sequence for evaluation the significant training score $NSR_j$ that corresponds to the training set $Ea_j$ containing the vector that is closest to the vector MO in the sense of vector quantification.

2. A method according to claim 1, **characterized in that** it comprises:

   between steps b) and c):

   b1) for each training set $EA_j$, using a second vectorization method to generate by vector quantification a reference dictionary $D_j$ made up of $N_j$ reference vectors $VR_l$ (where l = 1, 2, ..., $N_j$);

   and between steps c) and d):

   c1) selecting amongst the reference vectors $VR_l$ of the $\underline{k}$ reference dictionaries, the reference vector $VR_e$ which is closest to said vector MO; and

   **in that** step d) allocates to the audiovisual sequence for evaluation the significant training score $NSR_j$ corresponding to the reference dictionary containing said closest reference vector $Vr_i$.

3. A method according to claim 1 or claim 2, **characterized in that** the significant training scores $NSR_j$ are distributed in uniform manner along the score scale.

4. A method according to claim 1, **characterized in that** the significant training scores $NSR_j$ of at least some of the $\underline{k}$ reference dictionaries are distributed in non-uniform manner along the score scale.

5. A method according to claim 4, **characterized in that** said distribution is such that at least some of the reference dictionaries contain substantially the same numbers of reference vectors.

6. A method according to claim 4 or claim 5, **characterized in that** it comprises, between step a) and b), identifying $\underline{k}$ significant training scores $NSR_j$ from subjective scores $NS_i$ each considered as a one-dimensional vector, by finding the minimum distance between the set of the $N_0$ subjective scores $NS_i$ and the $\underline{k}$ significant training scores.

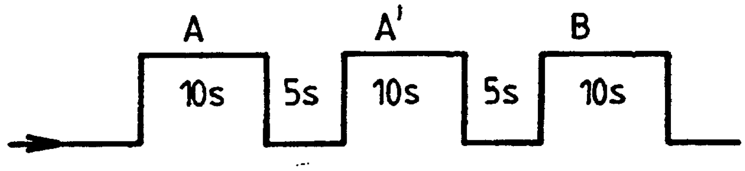


FIG.1

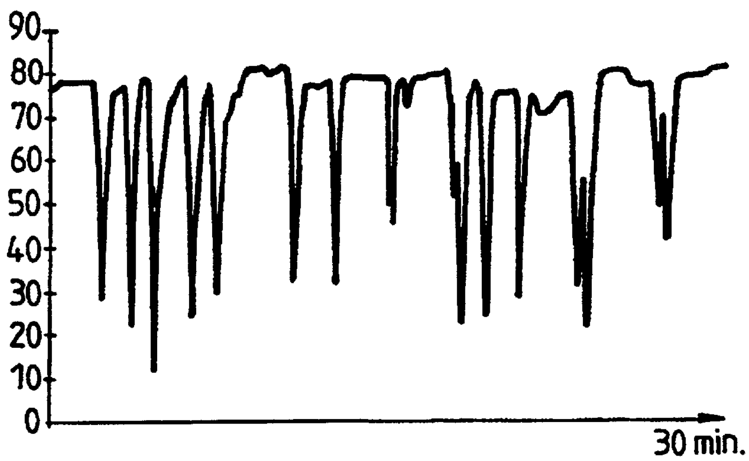


FIG.2

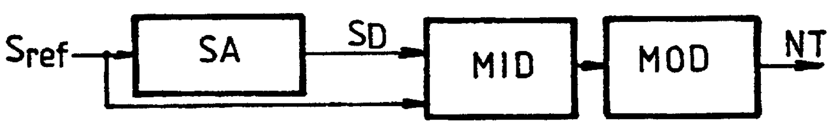


FIG.3

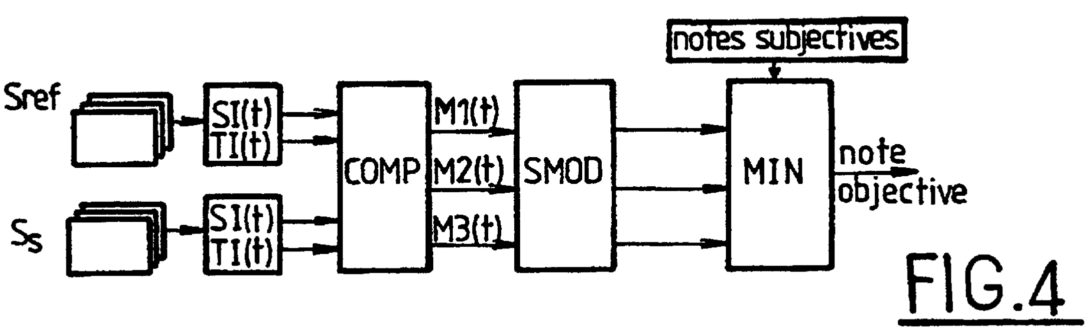


FIG.4

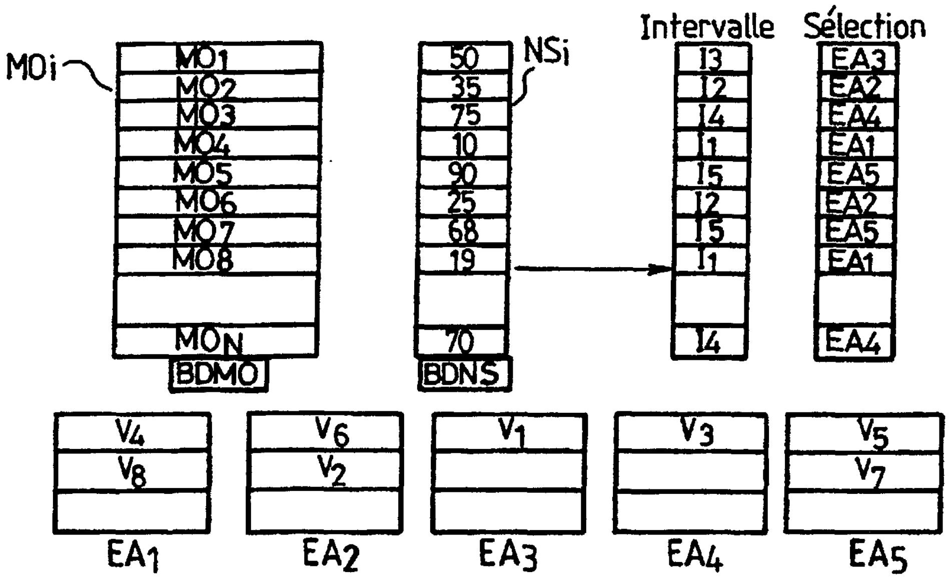


FIG.5

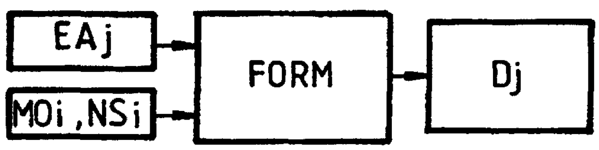


FIG.6

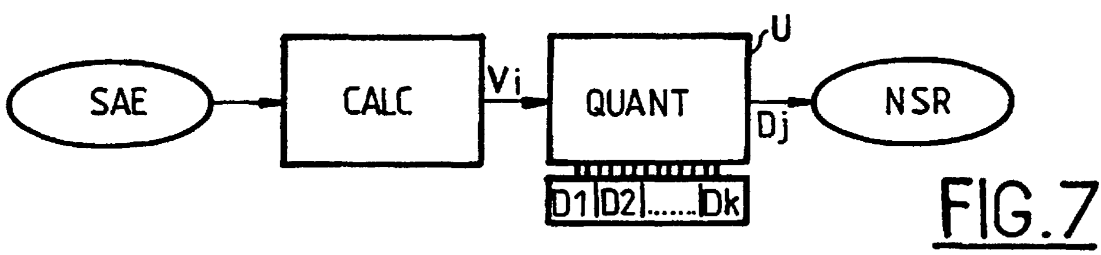


FIG.7

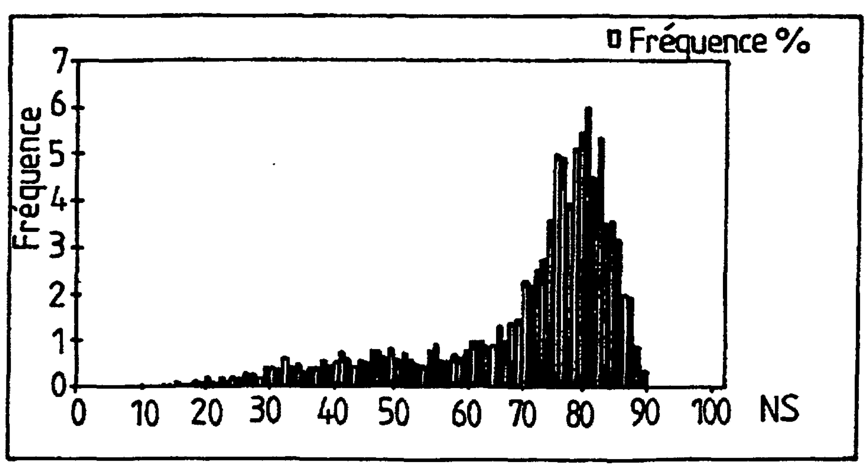


FIG.9

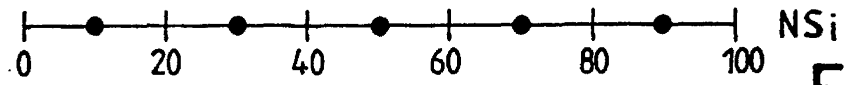


FIG.8

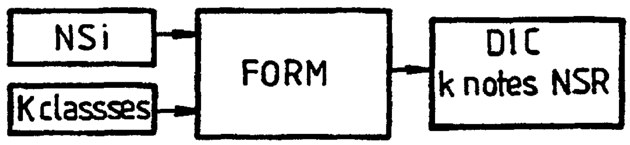


FIG.10

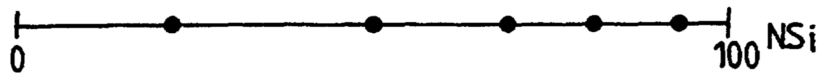


FIG.11

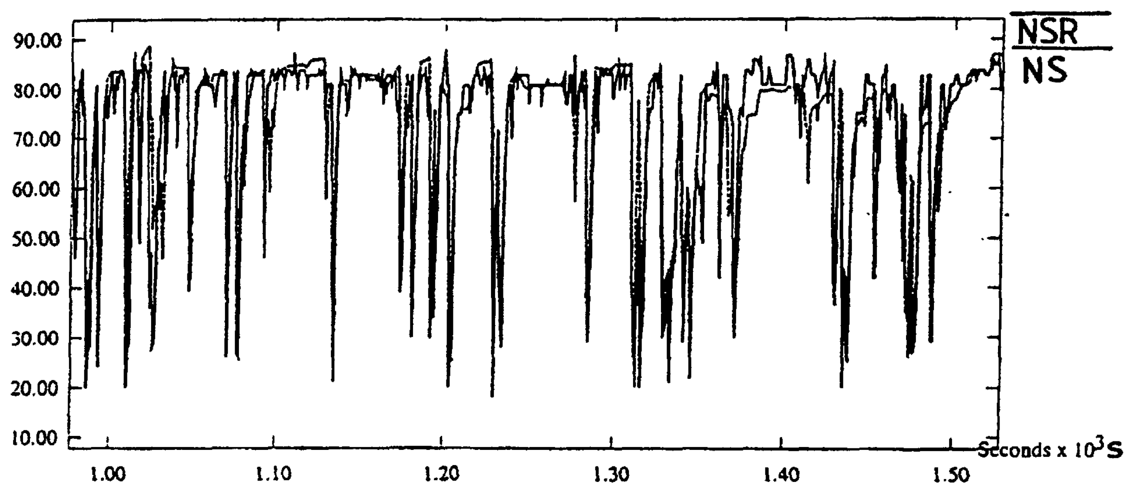


FIG.12

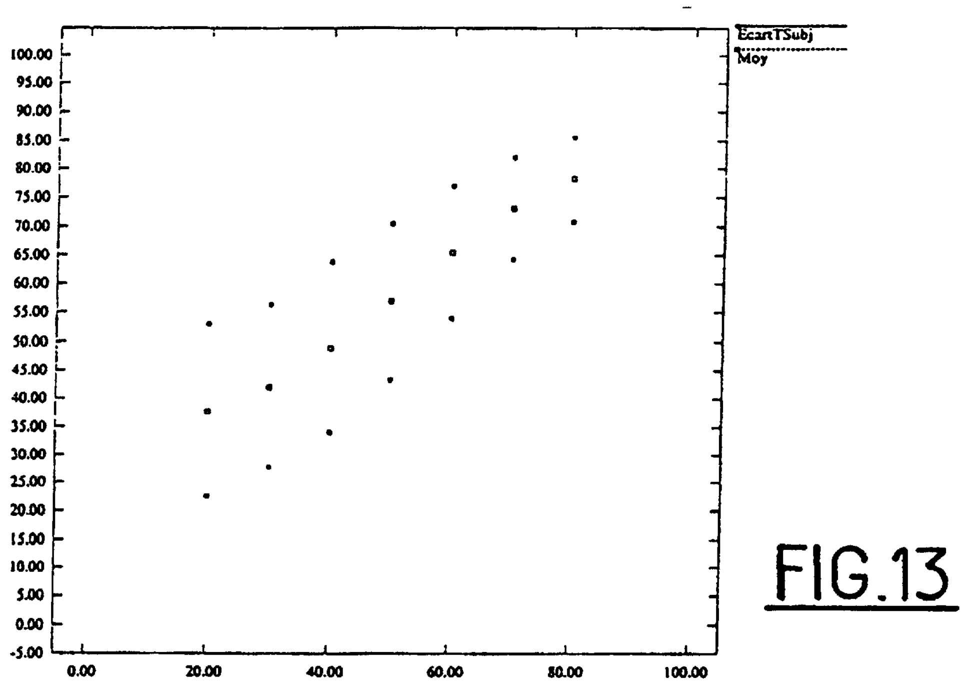


FIG.13

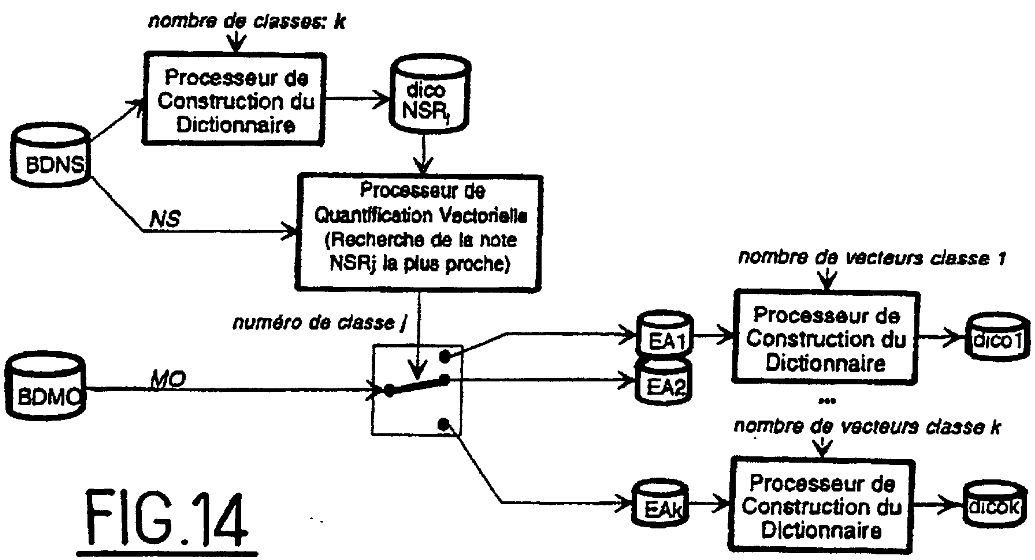


FIG.14

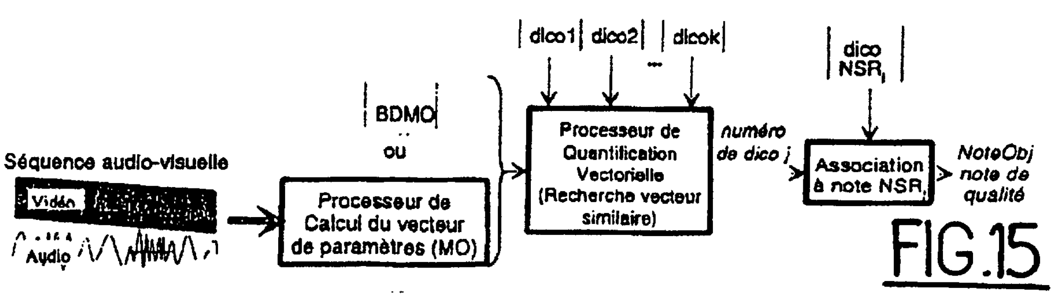


FIG.15